# EUROPEAN PATENT APPLICATION

(11) **EP 4 276 963 A1**
(43) Date of publication of application: **15.11.2023**
(21) Application number: 22860082.1
(22) Date of filing: 12.07.2022
(51) Int. Cl.: H01M 10/0525, H01M 4/13

(54) **ELECTRODE ASSEMBLY, CELL, BATTERY, AND POWER DEVICE**

(30) Priority: 26.08.2021 CN 202110989342
(71) Applicant: Contemporary Amperex Technology Co., Limited, Ningde, Fujian 352100 (CN)
(72) Inventor: LIN, Chenhui, Ningde, Fujian 352100 (CN); HE, Jianfu, Ningde, Fujian 352100 (CN); LIU, Qian, Ningde, Fujian 352100 (CN); YE, Yonghuang, Ningde, Fujian 352100 (CN); JIN, Haizu, Ningde, Fujian 352100 (CN)
(74) Representative: Herrmann, Uwe
(86) International application number: PCT/CN2022/105102
(87) International publication number: WO 2023/024736

(57) **Abstract**

This application relates to the technical field of batteries, and in particular, to an electrode assembly, a battery cell, a battery, and an electric apparatus. The electrode assembly includes a first current collector provided with a first coating region and a second coating region, where the first coating region is used for coating with an active substance material and the second coating region is used for coating with a lithiation material, and a first gap is further disposed between the first coating region and the second coating region. The electrode assembly can implement lithiation during charge and discharge cycles and avoid lithium precipitation and regional over-lithiation during the lithiation, further improving the effect of lithiation and ensuring the safety performance of the battery.

## Description

### CROSS-REFERENCE TO RELATED APPLICATIONS

This application claims priority to Chinese Patent Application No. 202110989342.0, filed on August 26, 2021 and entitled "ELECTRODE ASSEMBLY, BATTERY CELL, BATTERY, AND ELECTRIC APPARATUS", which is incorporated herein by reference in its entirety.

### TECHNICAL FIELD

This application relates to the field of batteries, and in particular, to an electrode assembly, a battery cell, a battery, and an electric apparatus.

### BACKGROUND

With the continuous development of new energy technologies, increasingly high requirements are imposed on battery technologies. For example, to stabilize the capacity of battery cells, it is necessary to supplement lithium ions to the battery cells so that electrolyte contains sufficient lithium ions to make the battery cells have stable capacity. Therefore, how lithium ions are supplemented to battery cells to stabilize the capacity of the battery cells is a problem that needs an urgent solution in the art.

### SUMMARY

In view of the foregoing issue, embodiments of this application provide an electrode assembly, a battery cell, a battery, and an electric apparatus, which can make the electric capacity more stable.

Embodiments of a first aspect of this application provide an electrode assembly. The electrode assembly includes a first current collector, where the first current collector includes a first coating region and a second coating region, the first coating region is coated with an active substance material and the second coating region is coated with a lithiation material, and in an extension direction of the first current collector, a first gap is disposed between the first coating region and the second coating region.

In the foregoing solution, when charge and discharge reaction of the electrode assembly occurs, the lithiation material in the second coating region can release lithium ions to electrolyte to make up for the lithium ions consumed during the forming of a solid electrolyte film, so that the electrolyte contains sufficient lithium ions to make batteries maintain stable capacity. In addition, such structure can also avoid problems such as lithium precipitation and uneven lithium intercalation caused by direct contact between the lithiation material and the active substance material during charge and discharge of the electrode assembly, further improving the effect of lithiation.

In some embodiments, the electrode assembly further includes a second current collector, where the first current collector and the second current collector are made into the electrode assembly through winding, and in a winding direction of the electrode assembly, the first current collector includes an extension portion that extends beyond the second current collector, and the second coating region is located in the extension portion.

In the foregoing solution, the second coating region is located in the extension portion, so that the lithiation material and the active substance material are respectively located at two ends of the first current collector in a winding direction so that the coating with the lithiation material and the active substance material can be completed with only one material switching in coating of the first current collector, which can reduce the process steps while facilitating processing, thereby improving processing efficiency. Moreover, the lithiation material is provided on a region of the first current collector extending beyond the second current collector, which can avoid lithium precipitation and poor effect of lithiation caused by the lithiation material facing the active substance material of the second current collector.

In some embodiments, at least part of the first gap is located in the extension portion.

The foregoing solution avoids the lithiation material coated on the extension portion from partially facing the active substance material coated on the second current collector, so as to avoid lithium precipitation. In addition, part of the first gap is disposed in the extension portion. When the first current collector is a positive electrode current collector, part of the first gap is located in the first current collector that is outside the extension portion, so that a region of the second current collector coated with the active substance can extend in the winding direction beyond a region of the first current collector coated with the active substance; when the first current collector is a negative electrode current collector, the first gap can be entirely located in the extension portion, so that the region of the first current collector coated with the active substance material can extend in the winding direction beyond the region of the second current collector coated with the active substance material. This provides sufficient lithium intercalation positions for the positive electrode active substance, thereby improving the cycling performance of the batteries.

In some embodiments, the first current collector includes at least two such first coating regions, and the second coating region is disposed between two adjacent ones of such first coating regions.

In the foregoing solution, the second coating region is disposed between two adjacent first coating regions, and the first gap is disposed between the first coating region and the second coating region. In this way, after the lithiation material supplements lithium ions to surrounding electrolyte, the lithium ions in the electrolyte can diffuse into the negative electrode active substance material on two sides and finally reach the lithium intercalation positions. Since the lithium ions in the electrolyte can diffuse into the lithium intercalation positions on two sides, the overall distance for all lithium ions that need to be intercalated into the negative electrode active substance material to reach all the lithium intercalation positions can be shortened, improving the overall lithiation efficiency.

In some embodiments, the electrode assembly further includes at least two second current collectors, where the first current collector and the second current collectors are made into the electrode assembly through winding, a second gap is disposed between two adjacent ones of such second current collectors, and the second coating region is disposed opposite the second gap.

When the first current collector is a positive electrode current collector, the foregoing solution can avoid the lithiation material applied on the second coating region from being opposite the blank second current collector, or can avoid the lithiation material applied on the second coating region from being opposite a negative electrode active substance material applied on the second current collector. This further avoids lithium precipitation of the lithium ions in the electrolyte on the blank current collector, or further avoids poor effect of overall lithiation caused by the increase in the total amount of the negative electrode active substance material.

In some embodiments, the electrode assembly further includes the second current collector, where the first current collector and the second current collector are made into the electrode assembly through winding, the second current collector is provided with a third coating region and a fourth coating region, a third gap is disposed between the third coating region and the fourth coating region, and the second coating region is disposed opposite the third gap.

When the first current collector is a negative electrode current collector, the foregoing solution can avoid the lithiation material applied on the second coating region from being opposite a positive electrode active substance material layer applied on the second current collector, so as to avoid lithium ions released from the positive electrode active substance material from being precipitated on a surface of the lithiation material.

In some embodiments, the first gap has a size greater than or equal to 1 mm in the extension direction of the first current collector.

The foregoing solution avoids contact between the active substance material applied on the first coating region and the lithiation material applied on the second coating region, thereby avoiding phenomena such as lithium precipitation and regional over-lithiation.

In some embodiments, the first current collector includes a first surface and a second surface that are opposite each other in a thickness direction of the first current collector, and the second coating region is located in the first surface and/or the second surface.

In the foregoing solution, coating area of the second coating region can be set according to a lithiation demand. Both the two surfaces of the first current collector in the thickness direction can be coated with the lithiation material, or the two surfaces, one can be used for coating with the lithiation material and the other can be used for coating with the active substance material. This allows for more flexible arrangement of positions of the lithiation material.

Embodiments of a second aspect of this application further provide a battery cell, including the electrode assembly according to any one of the foregoing embodiments.

Embodiments of a third aspect of this application further provide a battery, including the battery cell according to the embodiments of the second aspect of this application.

Embodiments of a fourth aspect of this application further provide an electric apparatus, including the battery according to the third aspect of this application, where the battery is configured to supply electrical energy.

The foregoing description is merely an overview of the technical solutions in the embodiments of this application. In order to better understand the technical means in the embodiments of this application, to achieve implementation according to content of the specification, and to make the above and other objects, features and advantages in the embodiments of this application more obvious and easy to understand, the following describes specific embodiments of this application.

### BRIEF DESCRIPTION OF DRAWINGS

Other features, purposes and advantages of this application will become more apparent by reading the following detailed description of the non-limitative embodiments with reference to the accompanying drawings, where the same or similar reference signs indicate the same or similar features.
FIG 1 is a schematic structural diagram of a vehicle according to an embodiment of this application;
FIG 2 is a schematic exploded view of a battery according to some embodiments of this application;
FIG 3 is a schematic exploded view of a battery cell according to some embodiments of this application;
FIG 4 is a schematic structural diagram of an electrode assembly according to some embodiments of this application;
FIG 5 is a schematic structural diagram of a first current collector and a second current collector after being unfolded according to some embodiments of this application;
FIG 6 is a schematic structural diagram of a first current collector and a second current collector after being unfolded according to some other embodiments of this application;
FIG 7 is a schematic structural diagram of an electrode assembly according to some other embodiments of this application;
FIG 8 is a schematic structural diagram of an electrode assembly according to still some other embodiments of this application; and
FIG 9 is a schematic structural diagram of a first current collector according to some embodiments of this application.

### Reference signs are described as follows:

1. vehicle;
2. battery;
3. controller;
4. motor;
5. box, 51. first box portion, 52. second box portion, 53. accommodating space;
6. battery cell;
61. electrode assembly;
611. first current collector, 611a. first coating region, 611b. second coating region, 611c. first gap, 611d. extension portion;
612. second current collector, 612a. third coating region, 612b. fourth coating region, 612c. third gap;
613. second gap;
62. housing;
63. end cover;
X. extension direction of first current collector, Y. thickness direction of first current collector;
A₁. first surface;
A₂. second surface.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated obj ects.

In the embodiments of this application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive).

After a battery cell is made, a solid electrolyte film is formed in the charge and discharge process. The solid electrolyte film is a passivation film layer with properties of solid electrolyte. The film can act as a good conductor of lithium ions in the battery cell, allowing lithium ions to be transported therein so that the lithium ions can pass through the film to a surface of graphite for lithium intercalation or deintercalation. Meanwhile, the film can also act as an electronic insulator to reduce the probability of short circuit inside the battery cell to improve self-discharge. Furthermore, the film can effectively prevent co-intercalation of solvent molecules, so as to prevent damage to an electrode material caused by the co-intercalation of solvent molecules, thereby improving the cycling performance and service life of the electrode material.

However, formation of the solid electrolyte film consumes part of the lithium ions, making the lithium ions in the electrolyte decrease, resulting in an irreversible capacity increase during charge and discharge, and leading to decreased charge and discharge efficiency of the electrode material and lower performance of the battery cell.

Based on this, some existing battery cells are added with a lithiation material. When the solid electrolyte film is formed and consumes part of the lithium ions, the lithiation material can supplement lithium ions to the electrolyte to reduce or even avoid irreversible capacity loss of the battery cells during charge and discharge. Among the existing battery cell structures containing a lithiation material, some of the structures separate the lithiation material from an electrode assembly by using a separator. In such structure, the process is complicated, additional processing is required for the separator used for separating the lithiation material from the electrode assembly, and additional conductive connection is also required for the lithiation material, leading to poor reliability and easily affecting the effect of lithiation. To solve these problems, persons skilled in the art have designed to apply, spray or vapor-deposit a layer of lithiation material on a surface of a negative electrode plate. However, because an active material coated on the negative electrode plate has uneven thickness, it is difficult to control uniformity of the lithiation material in applying the lithiation material. The uneven lithiation material applied on the surface of the negative electrode plate easily leads to regional over-lithiation and regional under-lithiation. The excess lithiation material resulting from the regional over-lithiation stays on the surface of the electrode plate and prevents intercalation of other lithium ions, which eventually leads to lithium dendrites on the surface of the electrode plate. The growth of lithium dendrites will pierce the separator, thus affecting the safety performance of the battery cell. The regional under-lithiation will compromise the lithiation effect.

Based on this, this application provides an electrode assembly. The electrode assembly includes a first current collector, where the first current collector includes a first coating region and a second coating region, the first coating region is used for coating with an active substance material and the second coating region is used for coating with a lithiation material, and a gap is disposed between the first coating region and the second coating region. In this way, the second coating region can continuously release lithium ions to the electrolyte during charge and discharge of the battery cell so that the electrolyte contains sufficient lithium ions. This can avoid lithium precipitation while achieving a good lithiation effect, thereby improving the performance of the battery cell.

The electrode assembly described in the embodiments of this application is applicable to a battery cell, a battery containing such battery cell, and an electric apparatus using such battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as an example for description of the following embodiments.

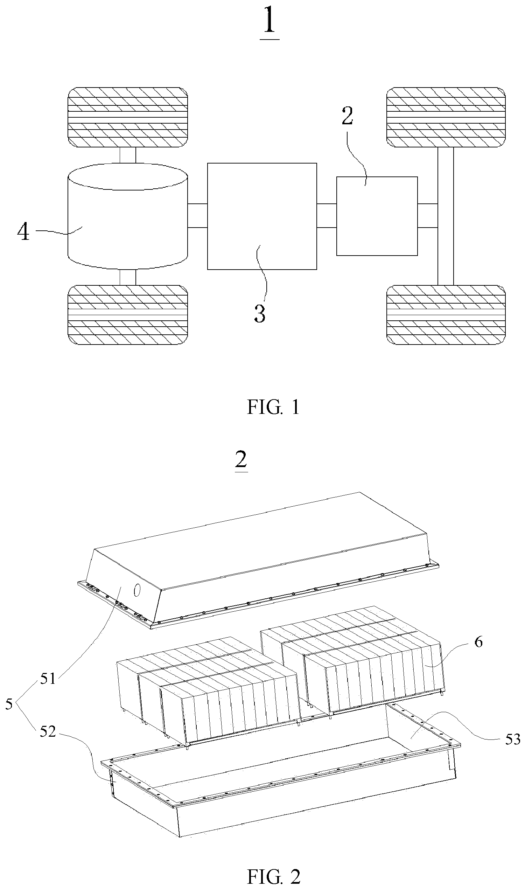

Referring to FIG 1, FIG 1 is a schematic structural diagram of a vehicle 1 according to some embodiments of this application. As shown in FIG 1, the vehicle 1 is provided with a battery 2 inside. The battery 2 is a single physical module that includes one or more battery cells for providing a higher voltage and capacity. For example, the battery mentioned in this application may include a battery module, a battery pack, or the like. The battery 2 may be disposed at the bottom or in the front or at the rear of the vehicle 1. The battery 2 may be configured to supply power to the vehicle 1. For example, the battery 2 may be used as an operational power source for the vehicle 1. The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power source for the vehicle 1 but also a driving power source for the vehicle 1, replacing or partially replacing fossil fuel or natural gas to provide driving traction for the vehicle 1.

Referring to FIG 2, FIG 2 is a schematic exploded view of the battery 2 according to some embodiments of this application. As shown in FIG 2, the battery 2 includes a box 5 and a battery cell 6, and the battery cell 6 is accommodated in the box 5.

The box 5 is configured to accommodate the battery cell 6, and the box 5 may be of various structures. In some embodiments, the box 5 may include a first box portion 51 and a second box portion 52. The first box portion 51 and the second box portion 52 fit together, so that the first box portion 51 and the second box portion 52 jointly define an accommodating space 53 for accommodating the battery cell. The second box portion 52 may be a hollow structure with an opening formed at an end, the first box portion 51 is a plate-shaped structure, and the first box portion 51 covers the opening side of the second box portion 52 so as to form the box 5 having the accommodating space 53. Alternatively, both the first box portion 51 and the second box portion 52 may be a hollow structure with an opening formed at an end, and the opening side of the first box portion 51 is engaged with the opening side of the second box portion 52 so as to form the box 5 having the accommodating space 53. Certainly, the first box portion 51 and the second box portion 52 may be in various shapes, such as cylinder or cuboid.

In order to improve the airtightness after the connection of the first box portion 51 and the second box portion 52, a sealing element such as sealing gum and sealing ring may also be disposed between the first box portion 51 and the second box portion 52.

Assuming that the first box portion 51 fits on the top of the second box portion 52, the first box portion 51 may also be referred to as an upper box cover, and the second box portion 52 may also be referred to as a lower box.

In the battery 2, a plurality of battery cells 6 are provided. The plurality of battery cells 6 may be connected in series, parallel, or series-parallel, where being connected in series-parallel means a combination of series and parallel connections of the plurality of battery cells 6. The plurality of battery cells 6 may be directly connected in series, parallel, or series-parallel, and then an entirety of the plurality of battery cells 6 is accommodated in the box 5. Certainly, the plurality of battery cells 6 may first be connected in series, parallel, or series-parallel to constitute a battery module (not shown in the figure), and then a plurality of battery modules are connected in series, parallel, or series-parallel to form an entirety which is accommodated in the box 5.

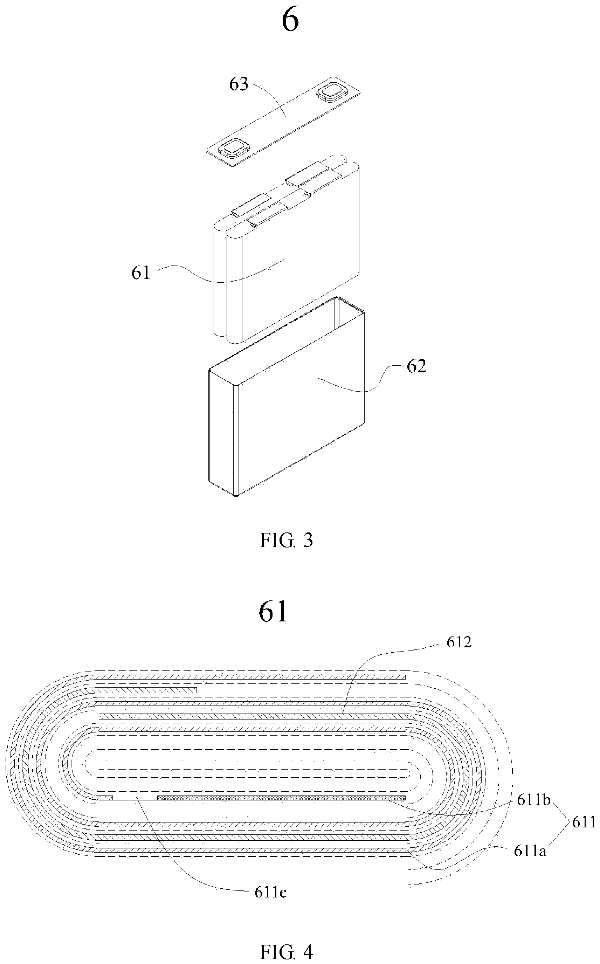

Referring to FIG 3, FIG 3 is a schematic exploded view of a battery cell 6 according to some embodiments of this application. As shown in FIG 3, the battery cell 6 may include an electrode assembly 61, a housing 62, an end cover 63, and an electrolyte (not shown in the figure). The electrode assembly 61 may include a positive electrode plate, a negative electrode plate, and a separator (none are shown in the figure). Working of the battery cell 6 mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting portion coated with the positive electrode active substance layer. With a lithium-ion battery as an example, its positive electrode current collector may be made of aluminum, and its positive electrode active substance layer includes a positive electrode active substance which may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting portion coated with the negative electrode active substance layer. The negative electrode current collector may be made of copper, and the negative electrode active substance layer includes a negative electrode active substance which may be carbon, silicon, or the like. The separator may be made of PP (polypropylene, polypropylene), PE (polyethylene, polyethylene), or the like. In addition, the electrode assembly 61 may be a wound structure or a laminated structure, but the embodiments of this application are not limited thereto. The housing 62 may have an opening at one end or have an opening at two ends. The end cover 63 covers the opening of the housing 62 to form, together with the housing 62, an accommodating space for accommodating the electrode assembly 61 and the electrolyte. Optionally, the housing 62 and the end cover 63 may be made of the same material, for example, both the housing 62 and the end cover 63 may be made of aluminum, so as to facilitate the welding of the housing 62 and the end cover 63. Alternatively, the housing 62 and the end cover 63 may be made of different materials, for example, the housing 62 and the end cover 63 may be made of different metals respectively, and the housing 62 and the end cover 63 may be connected through riveting or other manners.

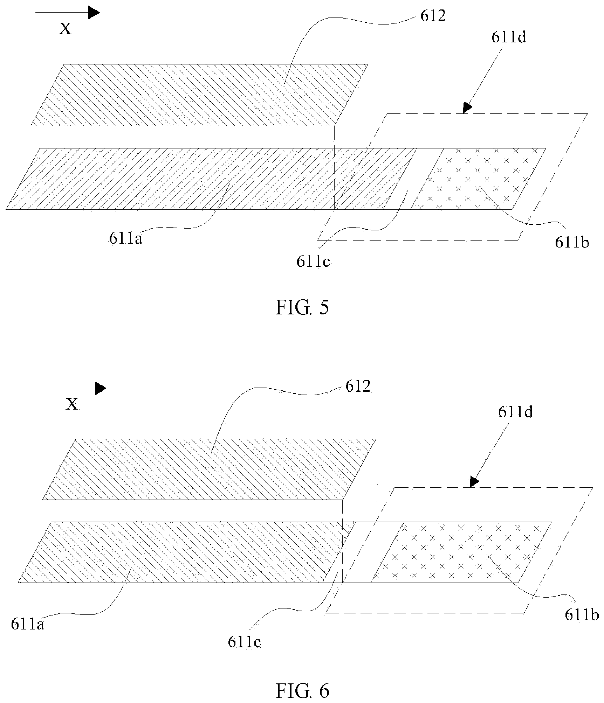

Referring to FIG 4 to FIG 5, FIG 4 is a schematic structural diagram of an electrode assembly 61 according to some embodiments of this application, and FIG 5 is schematic structural diagram of a first current collector 611 and a second current collector 612 after being unfolded according to some embodiments of this application.

As shown in FIG 4 and FIG 5, embodiments of this application provide an electrode assembly 61. The electrode assembly 61 includes a first current collector 611, where the first current collector 611 includes a first coating region 611a and a second coating region 611b, the first coating region 611a is coated with an active substance material and the second coating region 611b is coated with a lithiation material, and in an extension direction X of the first current collector 611, a first gap 611c is disposed between the first coating region 611a and the second coating region 611b.

As mentioned above, the active substance material includes a positive electrode active substance material and a negative electrode active substance material. The positive electrode active substance material is applied on a positive electrode current collector to form a positive electrode active substance layer, and the negative electrode active substance material is applied on a negative electrode current collector to form a negative electrode active substance layer. The positive electrode active substance material may include lithium cobaltate, lithium iron phosphate, ternary lithium, lithium manganate, or the like, and the negative electrode active substance material may include carbon, silicon, or the like.

The lithiation material may be used to supplement lithium ions to electrolyte for lithium to be intercalated into the negative electrode active substance layer applied on the negative electrode current collector. The lithiation material may include lithium oxide, lithium foil, and other materials, and may be composited onto the positive electrode current collector or the negative electrode current collector to form a lithium source, so as to constantly supplement lithium ions to the electrolyte.

The first current collector 611 may be a positive electrode current collector or a negative electrode current collector. When the first current collector 611 is a positive electrode current collector, the first coating region 611a may be used for coating with the positive electrode active substance material, while the second coating region 611b is used for coating with the lithiation material. The coating lengths and coating thicknesses of the first coating region 611a and the second coating region 611b affect amount of the active substance material applied and amount of the lithiation material applied. The amount of the active substance material applied and the amount of the lithiation material applied may be set based on the model of the battery cell 6. The lithiation material may be applied on a side surface of the first current collector 611 in a thickness direction, or may be disposed on two side surfaces of the first current collector 611 in the thickness direction. This is not limited in this application.

When the lithiation material comes into contact with the negative electrode active substance material, due to the difficulty of ensuring a consistent coating thickness at the contact between the lithiation material and the negative electrode active substance material, over-lithiation easily occurs at a region coated with relatively thick lithiation material, resulting in lithium precipitation of the electrode plate. When the lithiation material comes into contact with the positive electrode active substance material, the positive electrode active substance layer may become excessively thick, and the lithium ions inside are not easily released, resulting in poor effect of lithiation. As shown in FIG 4 or FIG 5, the first gap 611c is disposed between the first coating region 611a and the second coating region 611b. In this way, the first gap 611c can separate the active substance material applied on the first coating region 611a from the lithiation material applied on the second coating region 611b. This not only can reduce probability of lithium precipitation, but also can improve releasing efficiency of lithium ions, thereby improving the effect of lithiation.

In some embodiments of this application, still referring to FIG 4 and FIG 5, the electrode assembly 61 further includes a second current collector 612, where the first current collector 611 and the second current collector 612 are made into the electrode assembly 61 through winding, and in a winding direction (parallel to the extension direction X of the first current collector 611) of the electrode assembly 61, the first current collector 611 includes an extension portion 611d that extends beyond the second current collector 612, and the second coating region 611b is located in the extension portion 611d.

The second current collector 612 may be opposite to the first current collector in polarity, and may be a positive electrode current collector or a negative electrode current collector. The lithiation material is disposed on the extension portion 611d of the first current collector 611 extending beyond the second current collector 612 in the winding direction, so that the first current collector 611 can be coated successively with the lithiation material and the active substance material. This allows for easy processing, with only one material switching needed. In addition, only one first gap 611c needs to be disposed between the first coating region 611a and the second coating region 611b, so larger surface area of the first current collector 611 can be used for coating with the lithiation material and the active substance material, so as to improve the surface area utilization of the first current collector 611.

Referring to FIG 5 and FIG 6, FIG 6 is schematic structural diagram of a first current collector 611 and a second current collector 612 after being unfolded according to some other embodiments of this application.

In some embodiments of this application, as shown in FIG 5 and FIG 6, at least part of the first gap 611c is located in the extension portion 611d.

In the electrode assembly 61, amounts of the positive electrode active substance material and the negative electrode active substance material usually need to match each other to guarantee the capacity of the cell. To provide sufficient lithium intercalation positions for the positive electrode active substance material, it is necessary to form the electrode assembly 61 in such a way that the negative electrode active substance material layer extends beyond the positive electrode active substance material layer, that is, length of the negative electrode active substance material applied on the negative electrode current collector needs to cover and exceed length of the positive electrode active substance material applied on the positive electrode current collector.

As shown in FIG 5, when the first current collector 611 is a negative electrode current collector, to form the foregoing structure, the first gap 611c may be entirely located in the extension portion 611d, and at least part of the first coating region 611a is also located in the extension portion 611d to cover and exceed beyond a coating region of the second current collector 612 that is coated with the positive electrode active substance material.

As shown in FIG 6, when the first current collector 611 is a positive electrode current collector, to form the foregoing structure, part of the first gap 611c may be disposed to be located in the extension portion 611d, while part of the first gap 611c is located in a portion other than the extension portion 611d, and when the first current collector 611 and the second current collector 612 are wound, that part of the first gap 611c may be opposite the negative electrode active substance material layer on the second current collector 612, so that the negative electrode active substance material layer on the second current collector 612 covers and exceeds beyond a coating region of the first current collector 612 that is coated with the positive electrode active substance material.

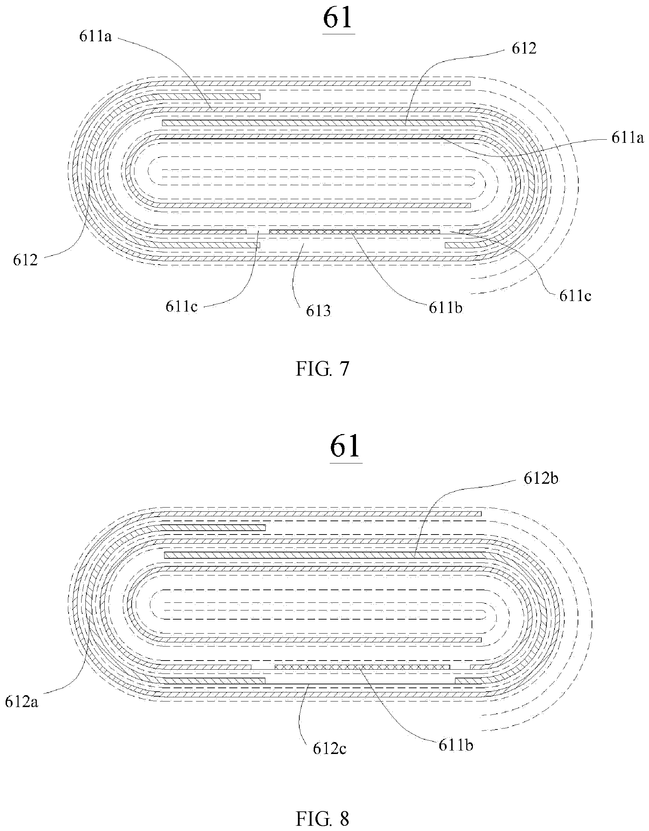

Referring to FIG 7, FIG 7 is a schematic structural diagram of an electrode assembly 61 according to some other embodiments of this application.

In some embodiments of this application, as shown in FIG 7, a first current collector 611 includes at least two first coating regions 611a, and a second coating region 611b is disposed between two adjacent first coating regions 611a.

Two first coating regions 611a may be spaced apart on the first current collector 611. The first coating region 611a is used for coating with an active substance material which may be a positive electrode active substance material or a negative electrode active substance material.

When the first coating region 611a is coated with the negative electrode active substance material, the second coating region 611b left between two first coating regions 611a is used for coating with a lithiation material. In this way, during the cycling of a battery cell 6, the lithiation material can supplement lithium ions to electrolyte, and the lithium ions can diffuse into the first coating regions 611a on two sides and are finally intercalated into a negative electrode active substance material layer on the first coating region 611a. This can shorten movement path of the lithium ions and improve efficiency of lithium intercalation. When the first coating region 611a is coated with the positive electrode active substance material, the second coating region 611b left between two first coating regions 611a is used for coating with the lithiation material. This can also shorten distance for the lithiation material to lithium intercalation positions and improve efficiency of lithium intercalation.

In other embodiments of this application, the first current collector 611 may also include a plurality of first coating regions 611a. The second coating region 611b may be disposed between every two adjacent first coating regions 611a. Optionally, the first current collector 611 may further include a plurality of first gaps 611c. The first gap 611c may be disposed between the adjacent first coating region 611a and second coating region 611b to avoid contact between the lithiation material and the active substance material. This is not limited in this application.

In some embodiments of this application, still referring to FIG 7, the electrode assembly 61 further includes at least two second current collectors 612, where the first current collector 611 and the second current collectors 612 are made into the electrode assembly 61 through winding, a second gap 613 is disposed between two adjacent second current collectors 612, and the second coating region 611b is disposed opposite the second gap 613.

When the lithiation material and the positive electrode active substance material are respectively applied on two opposite surfaces of the first current collector 611 and the second current collector 612, under the action of charge and discharge voltages of the battery cell 6, lithium ions in the positive electrode active substance easily migrate to a surface layer of the lithiation material and precipitate, resulting in lithium precipitation on a surface of the lithiation material. In addition, the lithium precipitated further prevents lithium ions in the lithiation material from being released to the electrolyte, thus affecting the effect of lithiation. When the first current collector 611 is a negative electrode current collector, the first coating region 611a is used for coating with the negative electrode active substance material and the second coating region 611b is used for coating with the lithiation material, and the plurality of second current collectors 612 are all used for coating with the positive electrode active substance material, so that the second coating region 611b is disposed opposite the second gap 613 between the adjacent second current collectors 612. This can avoid the lithiation material on the second coating region 611b can from being opposite the positive electrode active substance material on the second current collectors 612, thereby avoiding lithium precipitation on the surface of the lithiation material. In this way, probability of lithium precipitation of the battery cell 6 can be reduced while the effect of lithiation is guaranteed, thereby improving safety performance of the battery cell.

When the lithiation material is opposite the positive electrode current collector, under the action of charge and discharge voltages of the battery cell 6, lithium ions in the lithiation material may precipitate on a surface of the positive electrode current collector, affecting the safety performance of the battery cell 6. When the first current collector 611 is a positive electrode current collector, the first coating region 611a on the first current collector 611 is used for coating with the positive electrode active substance material, and the second coating region 611b is used for coating with the lithiation material. This can avoid the lithiation material applied on the second coating region 611b from being opposite an uncoated second current collector 612, so as to prevent lithium released from the lithiation material from eventually being precipitated on a surface of the second current collector 612 while such lithium precipitation will affect safe use of the battery cell 6.

Referring to FIG 8, FIG 8 is a schematic structural diagram of an electrode assembly 61 according to still some other embodiments of this application.

In some embodiments of this application, as shown in FIG 8, the electrode assembly 61 further includes a second current collector 612, where a first current collector 611 and the second current collector 612 are made into the electrode assembly 61 through winding, the second current collector 612 is provided with a third coating region 612a and a fourth coating region 612b, a third gap 612c is disposed between the third coating region 612a and the fourth coating region 612b, and a second coating region 611b is disposed opposite the third gap 612c.

The second current collector 612 is provided with the third coating region 612a and the fourth coating region 612b, and the third gap 612c is disposed between the third coating region 612a and the fourth coating region 612b, that is, a region is left uncoated on the second current collector 612. When the first current collector 611 is a negative electrode current collector, the second coating region 611b coated with a lithiation material is disposed opposite the third gap 612c, so that the second coating region 611b coated with the lithiation material can be avoided opposite the third coating region 612a or the fourth coating region 612b on the second current collector 612, so as to avoid that lithium released from a positive electrode active substance material applied on the third coating region 612a or the fourth coating region 612b precipitates on a surface of the lithiation material, thus affecting safety performance of the battery cell 6 and the effect of lithiation.

Referring to FIG 4 to FIG 8, in some embodiments of this application, the first gap 611c has a size greater than or equal to 1 mm in the extension direction X of the first current collector 611.

The first gap 611c is used for separating the lithiation material from the active substance material, so as to avoid phenomena such as lithium precipitation and regional over-lithiation caused by contact between the lithiation material and the active substance material. The size of the first gap 611c being set to be greater than or equal to 1 mm in the extension direction X of the first current collector 611 allows the lithiation material and the active substance material to maintain a distance without overlapping.

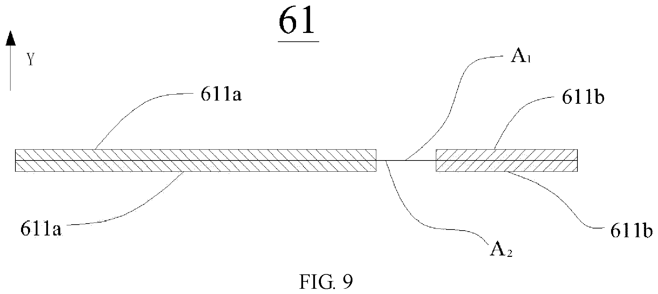

Referring to FIG 9, FIG 9 is a schematic structural diagram of a first current collector 611 according to some embodiments of this application.

As shown in FIG 9, the first current collector 611 may include a first surface A1 and a second surface A2 that are opposite each other in a thickness direction Y, and a second coating region 611b is located in the first surface A1 and/or the second surface A2.

Optionally, both the two surfaces A1 and A2 of the first current collector 611 may be coated with a lithiation material and an active substance material, or of the two surfaces A1 and A2 of the first current collector 611, one may be used for coating with the active substance material and the other may be used for coating with the lithiation material and the active substance material. When one surface, for example, A1, of the first current collector 611 is used for coating with the lithiation material and the active substance material, a surface of the second current collector 612 opposite A1 may be correspondingly provided with a third gap 612c or a second gap 613. No special settings are required for the two relative positions, allowing for convenient processing.

As shown in FIG 9, when the two surfaces A1 and A2 of the second current collector 612 are coated with the lithiation material and the active substance material, under the given amount of the lithiation material, length of the second coating region 611b in the extension direction X of the first current collector 611 can be reduced, and the lithiation material can be applied on both sides at the same time to shorten the coating time. In addition, both the two surfaces A1 and A2 are coated with the lithiation material. Different coating lengths can be set to adapt to different lithiation demands.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. An electrode assembly, **characterized by** comprising:
a first current collector, wherein the first current collector comprises a first coating region and a second coating region, the first coating region is coated with an active substance material and the second coating region is coated with a lithiation material, and in an extension direction of the first current collector, a first gap is disposed between the first coating region and the second coating region.

2. The electrode assembly according to claim 1, **characterized in that** the electrode assembly further comprises a second current collector, wherein the first current collector and the second current collector are made into the electrode assembly through winding, and in a winding direction of the electrode assembly, the first current collector comprises an extension portion that extends beyond the second current collector, and the second coating region is located in the extension portion.

3. The electrode assembly according to claim 2, **characterized in that** at least part of the first gap is located in the extension portion.

4. The electrode assembly according to claim 1, **characterized in that** the first current collector comprises at least two such first coating regions, and the second coating region is disposed between two adjacent ones of such first coating regions.

5. The electrode assembly according to claim 4, **characterized in that** the electrode assembly further comprises at least two second current collectors, wherein the first current collector and the second current collectors are made into the electrode assembly through winding, a second gap is disposed between two adjacent ones of such second current collectors, and the second coating region is disposed opposite the second gap.

6. The electrode assembly according to claim 4, **characterized in that** the electrode assembly further comprises a second current collector, wherein the first current collector and the second current collector are made into the electrode assembly through winding, the second current collector is provided with a third coating region and a fourth coating region, a third gap is disposed between the third coating region and the fourth coating region, and the second coating region is disposed opposite the third gap.

7. The electrode assembly according to any one of claims 1 to 6, **characterized in that** the first gap is greater than or equal to 1 mm.

8. The electrode assembly according to any one of claims 1 to 6, **characterized in that** the first current collector comprises a first surface and a second surface that are opposite each other in a thickness direction, and the second coating region is located in the first surface and/or the second surface.

9. A battery cell, **characterized by** comprising the electrode assembly according to any one of claims 1 to 8.

10. A battery, **characterized by** comprising the battery cell according to claim 9.

11. An electric apparatus, **characterized by** comprising the battery according to claim 10, wherein the battery is configured to supply electric energy.
